(19) Europäisches Patentamt
European Patent Office
Office européen des brevets

(11) **EP 3 868 602 B1**

(12) **FASCICULE DE BREVET EUROPEEN**

(45) Date de publication et mention
de la délivrance du brevet:
**25.10.2023 Bulletin 2023/43**

(21) Numéro de dépôt: **21157811.7**

(22) Date de dépôt: **18.02.2021**

(51) Classification Internationale des Brevets (IPC):
**B60N 2/879** (2018.01)     **B60N 2/885** (2018.01)
**H04R 1/28** (2006.01)     **H04R 5/02** (2006.01)

(52) Classification Coopérative des Brevets (CPC):
**B60N 2/879; B60N 2/885; H04R 5/023;**
H04R 1/2819; H04R 1/288; H04R 2499/13

(54) **APPUI-TÊTE COMPRENANT AU MOINS UNE ENCEINTE ACOUSTIQUE**

KOPFSTÜTZE, DIE MINDESTENS EINE LAUTSPRECHERBOX UMFASST

HEADREST COMPRISING AT LEAST ONE SPEAKER SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **19.02.2020 FR 2001631**

(43) Date de publication de la demande:
**25.08.2021 Bulletin 2021/34**

(73) Titulaire: **Faurecia Clarion Electronics Europe
75012 Paris (FR)**

(72) Inventeurs:
• **SOLTNER, Stéphane
70240 MAILLERONCOURT-CHARETTE (FR)**
• **NOIROT, Jérôme
75003 PARIS (FR)**
• **ELLER, Benjamin
75020 PARIS (FR)**

(74) Mandataire: **Lavoix
2, place d'Estienne d'Orves
75441 Paris Cedex 09 (FR)**

(56) Documents cités:
**EP-A1- 3 257 402     WO-A1-2018/050718
FR-A1- 2 665 996**

**Description**

La présente invention concerne un appui-tête du type comprenant au moins une enceinte acoustique, l'enceinte acoustique comprenant :

- au moins un haut-parleur définissant un axe de haut-parleur, configuré pour émettre des ondes sonores,
- un caisson comportant au moins une paroi interne délimitant avec le haut-parleur une cavité, la paroi interne présentant au moins une partie de réception du haut-parleur délimitant une ouverture et une partie de fond opposée à la partie de réception selon l'axe de haut-parleur, le haut-parleur étant monté sur au moins un bord de ladite ouverture (voir par exemple EP 3 257 402 A1).

La présente invention porte également sur un siège, notamment pour un véhicule, comprenant un tel appui-tête.

Dans les systèmes acoustiques configurés pour émettre des sons, les enceintes acoustiques, composants ces systèmes, présentent une forme géométrique particulière adaptée à la propagation optimale des ondes sonores générées par le haut-parleur.

Dans un appui-tête, l'enceinte acoustique présente généralement des dimensions limitées adaptées à l'intégration de cette enceinte dans l'appui-tête. Il en résulte que le caisson de l'enceinte acoustique présente une géométrie particulière adaptée à son intégration dans l'appui-tête et une cavité présentant un volume généralement limité.

Un tel caisson présentant une géométrie particulière crée davantage de réflexions et d'émission incontrôlées des ondes sonores générées par le haut-parleur par rapport aux enceintes acoustiques traditionnelles. En particulier, des ondes stationnaires apparaissent dans ces enceintes adaptées pour appui-tête, ce qui entraîne un renforcement et/ou une atténuation de certaines fréquences dans le son émis par ces enceintes.

Il en résulte que le la variation de la pression acoustique (connue également sous le sigle « SPL » signifiant en anglais « Sound Pressure Level ») mesurée en sortie de l'enceinte acoustique et le taux distorsion harmonique total (connue également sous le sigle « THD » signifiant en anglais « Total Harmonic Distorsion ») mesurée en sortie de l'enceinte acoustique présentent des variations d'amplitude importantes, caractéristiques des réflexions et émissions incontrôlées des ondes sonores dans l'enceinte acoustique.

Le son émis par l'enceinte acoustique présente donc des distorsions et/ou des réflexions incontrôlées et/ou des émissions incontrôlées, dégradant le son émis par l'enceinte acoustique lorsqu'elle est intégrée dans un appui-tête.

L'un des buts de l'invention est de pallier les inconvénients précités en proposant un appui-tête du type précité comprenant une enceinte acoustique émettant un son de meilleur qualité.

A cet effet, l'invention concerne un appui-tête du type précité dans lequel l'enceinte acoustique comprend au moins une couche en au moins un matériau absorbant acoustique agencée à l'intérieur de la cavité et recouvrant au moins une zone de recouvrement de la partie de fond.

La couche de matériau absorbant acoustique agencée à l'intérieur de la cavité a pour effet d'absorber l'énergie des ondes sonores émises par le haut-parleur. Ainsi, la couche de matériau absorbant acoustique permet de limiter les réflexions des ondes sonores à l'intérieur de la cavité et donc de limiter l'apparition d'ondes stationnaires. Plus précisément, la couche de matériau acoustique permet d'absorber notamment la réflexion de l'onde progressive arrière au haut-parleur, évitant ainsi la formation d'une onde stationnaire. L'enceinte acoustique émet alors un son de meilleure qualité.

La couche de matériau absorbant acoustique permet donc d'obtenir une enceinte intégrée dans un appui-tête émettant un son de meilleur qualité.

En outre, la couche de matériau absorbant acoustique améliore l'isolation vis-à-vis de l'extérieure de l'enceinte acoustique en réduisant les vibrations et le rayonnement du caisson.

Selon d'autres caractéristiques de l'appui-tête, considérées seules ou selon toute combinaison techniquement possibles :

- la zone de recouvrement est agencée au moins en partie en regard du haut-parleur selon l'axe de haut-parleur.
- l'enceinte acoustique comprend un tube résonateur agencé au moins en partie à l'intérieur de la cavité, le tube résonateur présentant au moins un orifice d'entrée d'ondes sonores débouchant dans la cavité, ledit au moins un orifice d'entrée ayant une projection sur au moins une portion nue de la paroi interne selon un axe normal à l'orifice d'entrée, ladite portion nue étant dépourvue de couche de matériau absorbant acoustique.
- le tube résonateur présente un diamètre interne, la paroi interne comprenant une portion périphérique s'étendant autour d'au moins une partie de la portion nue, ladite portion périphérique présentant une dimension maximale comprise entre une fois et une fois et demi le diamètre interne du tube résonateur, ladite portion périphérique étant également dépourvue de couche de matériau absorbant acoustique.
- le tube résonateur délimite une conduite de circulation des ondes sonores, la conduite de circulation étant dépourvue de couche de matériau absorbant acoustique.
- l'enceinte acoustique présente un radiateur passif monté sur une partie de montage de la paroi interne, le radiateur passif comprenant une membrane s'étendant sensiblement dans un plan, au moins une partie de la paroi interne agencée en regard du radiateur passif selon une direction normale au plan dans lequel s'étend la membrane est dépourvue de couche de matériau absorbant acoustique.

- le matériau absorbant acoustique de la couche de matériau acoustique absorbant acoustique comprend au moins l'un des matériaux compris dans la liste de matériaux suivants : des fibres d'acétate liées, de la laine de mouton à poils longs, du feutre acoustique, du feutre de laine pure, de la mousse acoustique, du mastic bitumineux, la couche de matériau acoustique comprenant préférentiellement au moins des fibres d'acétate liées.
- la couche en matériau absorbant acoustique est réalisée en au moins un premier matériau présentant une première masse surfacique et en au moins un deuxième matériau présentant une deuxième masse surfacique distincte de la première masse surfacique.
- l'appui-tête comprend un élément de garnissage, l'enceinte acoustique étant au moins en partie agencée à l'intérieur de l'élément de garnissage.
- la couche de matériau absorbant acoustique s'étend en saillie de la zone de recouvrement selon l'axe de haut-parleur. A titre d'exemple, une dimension de la couche de matériau absorbant acoustique le long de l'axe du haut-parleur est au moins égale à un tiers de la distance entre la partie de réception et la partie de fond.

L'invention concerne, en outre, un siège notamment pour un véhicule, comprenant un appui-tête tel que décrit précédemment.

L'invention concerne en outre un élément de garnissage d'un véhicule comprenant au moins une enceinte acoustique, l'enceinte acoustique comprenant au moins un haut-parleur définissant un axe de haut-parleur configuré pour émettre des ondes sonore, un caisson comportant au moins une paroi interne délimitant avec le haut-parleur une cavité, la paroi interne présentant au moins une partie de réception du haut-parleur délimitant une ouverture et une partie de fond opposée à la partie de réception selon l'axe de haut-parleur, le haut-parleur étant monté sur au moins un bord de ladite ouverture, caractérisé en ce que l'enceinte acoustique comprend au moins une couche en au moins un matériau absorbant acoustique agencée à l'intérieur de la cavité et recouvrant au moins une zone de recouvrement de la partie de fond.

D'autres aspects et avantages de l'invention apparaîtront à la lecture de la description qui suit, donnée à titre d'exemple et faite en référence aux dessins annexés, sur lesquels :

- la figure 1 est une vue en perspective d'un appui-tête comprenant une enceinte acoustique selon l'invention,
- la figure 2 est une vue en perspective d'une enceinte acoustique selon un mode de réalisation de l'invention,
- la figure 3 est une vue en coupe de l'enceinte acoustique de la figure 2,
- la figure 4 est une vue en perspective d'une enceinte acoustique selon un autre mode de réalisation de l'invention,
- la figure 5 est une vue en perspective d'une paroi d'un caisson de l'enceinte de la figure 4 recouverte d'un matériau absorbant acoustique,
- la figure 6 est un graphique montrant un signal représentatif de la pression acoustique pour une enceinte acoustique de la figure 5 et montrant un signal représentatif de la pression acoustique d'une enceinte acoustique de la figure 5 dépourvue de la couche de matériau absorbant acoustique,
- la figure 7 est un graphique montrant un signal représentatif du taux de distorsion harmonique total pour une enceinte acoustique de la figure 5 et montrant un signal représentatif du taux de distorsion harmonique total pour une enceinte acoustique de la figure 5 dépourvue de la couche de matériau absorbant acoustique,
- la figure 8 est une représentation de l'enceinte acoustique de la figure 5 selon une variante,
- la figure 9 est une vue en perspective d'une enceinte acoustique selon encore un autre mode de réalisation de l'invention, et
- la figure 10 est une vue en coupe de l'enceinte acoustique de la figure 9.

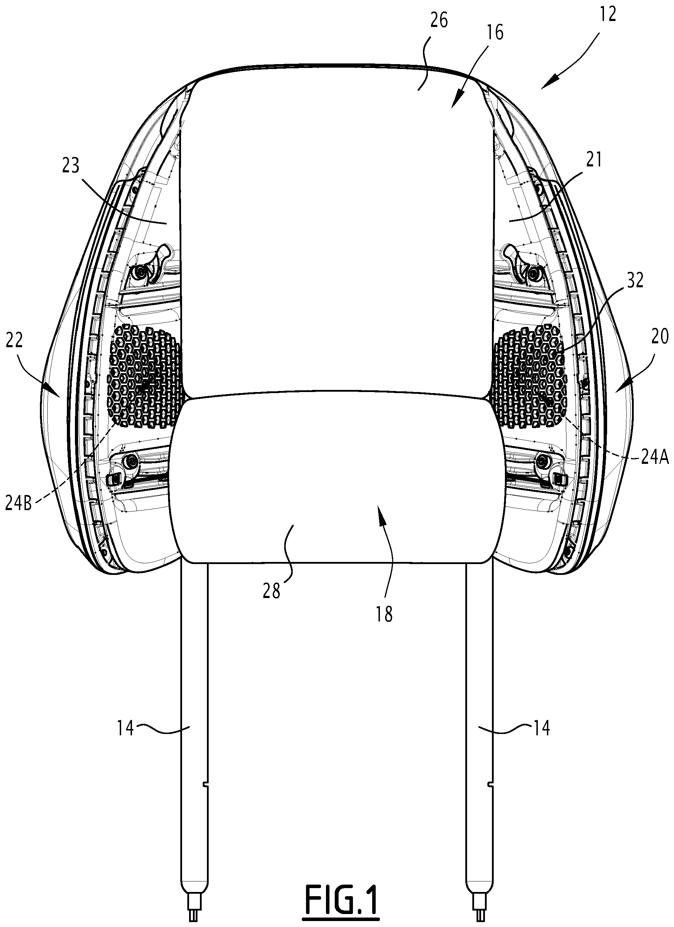

Un appui-tête 12 selon l'invention est représenté sur la figure 1.

L'appui-tête 12 est par exemple un appui-tête d'un siège (non représenté) d'un véhicule automobile. En variante, le véhicule est un véhicule ferroviaire, maritime ou aérien.

Un tel appui-tête 12 est par exemple destiné à être fixé de manière amovible sur une partie supérieure du siège.

De manière connue, l'appui-tête 12 comprend généralement deux tiges 14 coulissant dans deux fourreaux correspondants ménagés dans la partie supérieure du siège.

En outre, l'appui-tête 12 comprend au moins un élément de garnissage délimitant un logement dans lequel est agencé au moins une enceinte acoustique. Ainsi, l'enceinte acoustique est au moins en partie agencée à l'intérieur de l'élément de garnissage.

Dans un exemple de réalisation spécifique, l'appui-tête 12 comprend au moins un premier corps 16, un deuxième corps 18, un troisième corps 20, un quatrième corps 22 et au moins une enceinte acoustique 24.

Le premier corps 16 définit une première surface d'appui 26 pour la tête de l'occupant du siège.

Le deuxième corps 18 définit une deuxième surface d'appui 28 de la nuque de l'occupant.

Le premier corps 16 et le deuxième corps 18 sont par exemple des éléments de garnissage. En outre, le premier corps 16 et le deuxième corps 18 sont par exemple recouverts d'une couche d'aspect, par exemple, en cuir ou en tissu.

Le troisième corps 20 et le quatrième corps 22 sont agencés de part et d'autre du premier corps 16 et du deuxième corps 18. Autrement dit, le premier corps 16 et le deuxième corps 18 sont agencés entre le troisième corps 20 et le quatrième corps 22.

Le troisième corps 20 et le quatrième corps 22 sont destinés à être positionnés de part et d'autre de la tête de l'occupant du siège.

Par exemple, le troisième corps et le quatrième corps sont décalés angulairement par rapport au premier corps 16 en direction de la première surface d'appui 26 et de la deuxième surface d'appui 28.

Le troisième corps 20 et le quatrième corps 22 comprennent chacun au moins un élément de garnissage 21 et 23.

L'au moins une enceinte acoustique 24 est agencée au moins en partie à l'intérieur d'un des éléments de garnissage 21, 23 de l'appui-tête 12.

L'enceinte acoustique 12 présente au moins un haut-parleur 30. Le haut-parleur 30 est adapté pour émettre des ondes sonores dans un habitacle du véhicule et notamment à proximité des oreilles d'un occupant du siège.

Dans le présent exemple de réalisation, l'appui-tête 12 comprend une première enceinte 24A comprenant au moins un premier haut-parleur 30A et une deuxième enceinte 24B comprenant au moins un deuxième haut-parleur (non visible sur les figures).

La première enceinte 24A est au moins en partie agencée à l'intérieur de l'élément de garnissage 21 du troisième corps 20. Par exemple, l'élément de garnissage 21 du troisième corps 20 comprend une grille de protection 32 agencée en regard de la première enceinte 24A.

La deuxième enceinte 24B est au moins en partie agencé à l'intérieur de l'élément de garnissage 23 du quatrième corps 22. Par exemple, l'élément de garnissage 23 du quatrième corps 22 présente également une grille de protection du deuxième haut-parleur agencée en regard de la deuxième enceinte 24B.

Dans le présent exemple de réalisation, la première enceinte 24A et la deuxième enceinte 24B sont identiques. Ainsi, dans la suite de la présente description, seule la première enceinte acoustique 24A est décrite et nommée généralement par le terme « enceinte acoustique 24A ». La description de la première enceinte acoustique 24A s'applique en tous points à la deuxième enceinte acoustique 24B.

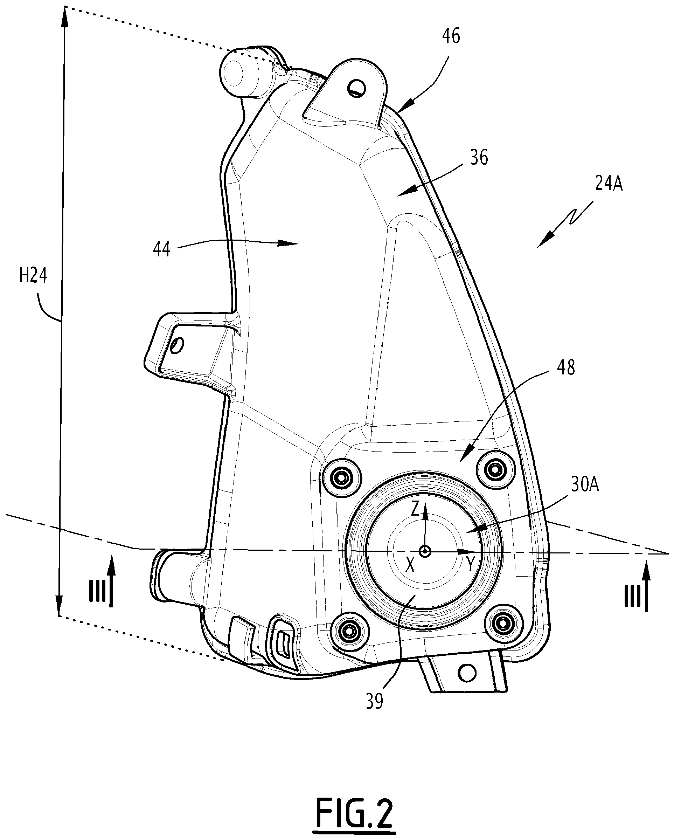

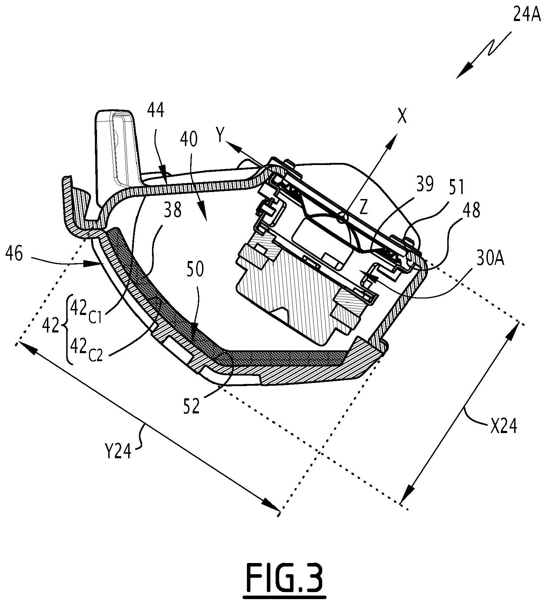

Dans un premier mode de réalisation de l'appui-tête 12, l'appui-tête 12 comprend l'enceinte acoustique 24A montrée sur les figures 2 et 3.

On reconnaît sur ces figures le haut-parleur 30A de l'enceinte acoustique 24A. En outre, l'enceinte acoustique 24A comprend au moins un caisson 36 et au moins une couche 38 en matériau absorbant acoustique.

Le haut-parleur 30A comprend une membrane 39 configurée pour être mobile en translation par rapport au caisson 36 selon un axe X. La membrane 39 est configurée pour émettre des ondes sonores.

L'axe X est appelé dans la suite axe de haut-parleur X. Il est également défini un axe transversal Y perpendiculaire à l'axe de haut-parleur X. Il est aussi défini un axe d'élévation Z sensiblement perpendiculaire à l'axe de haut-parleur X et à l'axe transversal Y.

Il est entendu généralement dans la présente par « sensiblement », une incertitude de mesure de plus ou moins 1 0%.

Le haut-parleur 30A est adapté pour diffuser des ondes sonores de fréquences inférieures ou égales à 20 kilo Hertz (kHz), préférentiellement comprises entre 100 Hertz (Hz) et 20 kHz et plus préférentiellement comprises entre 200 Hz et 20 kHz.

Le caisson 36 délimite avec le haut-parleur 30A une cavité 40.

Avantageusement, le caisson 36 est réalisé en un matériau étanche à l'air. Le caisson 36 est par exemple réalisé en plastique.

Le caisson 36 présente au moins une paroi interne 42.

La paroi interne 42 est agencée dans la cavité 40.

Dans l'exemple particulier décrit, le caisson 36 comprend une première demi-coque 44 présentant une paroi interne $42_{C1}$ et une deuxième demi-coque 46 présentant une paroi interne $42_{C2}$. Les deux demi-coques 44 et 46 sont solidaires l'une de l'autre. La paroi interne paroi interne $42_{C1}$ de la première demi-coque 44 et la paroi interne $42_{C2}$ de la deuxième demi-coque 46 forment ensemble la paroi interne 42 du caisson 36.

En outre, la première demi-coque 44 et la deuxième demi-coque 46 présentent chacune une forme concave, les concavités étant tournées l'une vers l'autre lorsque les demi-coques sont assemblées.

La paroi interne 42 présente au moins une partie de réception 48 du haut-parleur 30A et au moins une partie de fond 50 opposée à la partie de réception 48 selon l'axe de haut-parleur X.

La partie de réception 48 délimite une ouverture 51 traversante. Le haut-parleur 30A est monté sur au moins un bord de ladite ouverture 51. Dans cet exemple, la partie de réception 48 est formée par une partie de la paroi interne $42_{C1}$ de la première demi-coque 44.

La partie de fond 50 est opposée à la partie de réception 48 selon l'axe de haut-parleur X.

La partie de fond 50 présente une région agencée au moins en partie en regard du haut-parleur 30A selon l'axe de haut-parleur X, appelée « zone de recouvrement 52 ». Il est entendu par « agencée au moins en partie en regard du haut-parleur 30A selon l'axe de haut-parleur X» que la zone de recouvrement 52 comprend au moins en partie une région de la partie de fond 50 délimitée par le projeté orthogonal de la membrane 39 du haut-parleur 30A selon l'axe de haut-parleur X sur la partie de fond 50. Ainsi, dans le présent exemple de réalisation, la zone de recouvrement 52 est une portion de la partie de fond 50 agencée au moins en partie en regard du haut-parleur 30A selon l'axe de haut-parleur X. Ainsi, la zone de recouvrement 52 comprend par exemple l'axe de haut-parleur X ainsi qu'une région de la partie de fond 50 s'étendant autour de l'axe X.

Avantageusement, la zone de recouvrement 52 est une portion de la partie de fond 50 agencée en regard de l'ensemble du haut-parleur 30A selon l'axe de haut-parleur X.

Avantageusement, la zone de recouvrement 52 s'étend au-delà de la partie de fond 50 délimitée au moins en partie par le projeté orthogonal de la membrane 39 selon l'axe de haut-parleur X. Par exemple, la zone de recouvrement 52 s'étend sur toute la partie de fond 50. Préférentiellement, la zone de recouvrement 52 correspond à l'ensemble de la paroi interne 42.

La couche 38 en matériau absorbant acoustique est agencée à l'intérieur de la cavité 40 et recouvre au moins la zone de recouvrement 52 de la partie de fond 50.

Selon l'exemple spécifique décrit dans la présente description, la zone de recouvrement 52 correspond à l'ensemble de la paroi interne $42_{C2}$ de la deuxième demi-coque 46. Ainsi, la couche 38 de matériau absorbant acoustique recouvre l'ensemble de la paroi interne $42_{C2}$ de la deuxième demi-coque 46.

Ainsi, préférentiellement, la couche 38 de matériau absorbant acoustique recouvre également au moins en partie la paroi interne $42_{C1}$ de la première demi-coque 44 et de préférence l'ensemble de la paroi interne $42_{C1}$ de la première demi-coque 44.

La couche 38 de matériau absorbant acoustique a pour effet d'absorber l'énergie de l'onde sonore qui atteint ladite couche 38. En outre, la couche 38 de matériau absorbant acoustique a pour effet de diminuer la célérité de l'onde sonore qui atteint ladite couche 38. En outre, la couche 38 de matériau absorbant acoustique a pour effet de limiter la réflexion des ondes acoustiques atteignant ladite couche 38. La couche 38 de matériau absorbant acoustique limite donc l'apparition des ondes stationnaires dans l'enceinte acoustique 24A. La couche 38 de matériau augmente également virtuellement le volume V40 (non représenté sur les figures) de la cavité 40 et permet d'abaisser la fréquence de coupure de l'enceinte acoustique 24A.

En outre, la couche 38 de matériau absorbant acoustique augmente l'isolation extérieure de l'enceinte acoustique 24A en réduisant les vibrations et les radiations du caisson 36.

Le matériau absorbant acoustique de la couche 38 de matériau absorbant acoustique présente plusieurs propriétés, ces propriétés étant notamment une porosité, une résistivité à l'air ainsi qu'une masse surfacique.

Par exemple, la porosité du matériau absorbant acoustique est comprise entre 70% et 98%, entre 80% et 98% ou encore entre 95% et 98%.

La résistivité à l'air du matériau absorbant acoustique est par exemple comprise entre 3 kN.s.m$^{-4}$ et 500 kN.s.m$^{-4}$ ou encore entre 40 kN.s.m$^{-4}$ et 500 kN. s.m$^{-4}$ (le symbole « kN » correspond à l'unité de kilo Newton, le symbole « s » à l'unité de seconde, et le symbole « m » à l'unité de mètre).

Par exemple, la couche 38 de matériau absorbant acoustique comprend au moins un matériau compris dans la liste de matériaux suivants : des fibres d'acétate, des fibres d'acétate liées (connues en anglais sous le terme « Bonded Acetate Fiber » dont l'acronyme est « BAF ») se présentant par exemple sous forme d'ouate de fibres d'acétate liées, de la laine de mouton à poils longs, du feutre acoustique, du feutre de laine pure, de la mousse acoustique, du mastic bitumineux.

Les fibres d'acétate liées présentent toutes un diamètre sensiblement identique. Les fibres d'acétate liées ont des performances acoustiques différentes de celles des fibres de laine qui présentent un diamètre aléatoire.

Les fibres d'acétate liées se présentent par exemple sous la forme d'ouate de fibres d'acétate liées. Les fibres d'acétate liées sont faciles à utiliser et en particulier à couper. En outre, une couche de matériau absorbant acoustique formée d'ouate de fibres d'acétate liées est autoportante.

La laine de mouton à poils longs a pour effet de fournir un effet d'amortissement sur la sortie des fréquences comprises entre 300 Hz et 10 kHz. En outre, la laine de mouton à poils longs permet d'augmenter acoustiquement le volume V40 de la cavité 40 de l'enceinte acoustique 24A et donc modifier les caractéristiques de la cavité 40. Une couche 38 de matériau absorbant acoustique en laine de mouton à poils longs présente par exemple une masse volumique de sensiblement 16000 g.m$^{-3}$.

Pour former une couche 38 de matériau absorbant acoustique, les fibres de laine de mouton à poils longs sont déposées pour former un volume de fibres de laine. Les fibres de laine sont maintenues en suspension à l'intérieur de la cavité 40 sur la zone de recouvrement 52, de manière connue, en utilisant par exemple, des paquets de fils tissés en deniers fins ou présentant des mailles en plastique logeant les fibres de laine. Par exemple, les paquets sont maintenus par des tiges de goujon en bois.

Le feutre acoustique est composé de fibres qui absorbent l'énergie des ondes sonores. L'absorption de l'énergie des ondes sonore augmente la température des fibres. Le degré d'absorption dépend notamment de l'épaisseur des fibres, de la nature des fibres, de la masse volumique du feutre et de la masse volumique du feutre. La masse surfacique du feutre est par exemple comprise entre 1100 g.m$^{-2}$ et 1700 g.m$^{-2}$. Certains feutres sont réalisés à partir de deux matériaux, chaque matériau présentant une masse volumique distincte. Ainsi, ces feutres présentent une portion interne et une portion externe. La portion interne présente une masse volumique inférieure à la masse volumique de la partie externe.

Le feutre de laine pure comprend une base centrale en jute sur laquelle sont tissées et/ou cousues une ou deux couches de fils de laine pure. L'épaisseur de la base centrale détermine la construction de la couche. Une épaisseur de la base centrale est par exemple comprise entre 7,5 millimètres (mm) et 19 mm d'épaisseur.

La mousse acoustique se présente sous la forme de cellules délimitées par un matériau. Les cellules de la mousse acoustique sont choisies pour avoir une dimension spécifique afin de fournir une couche de matériau absorbant acoustique adapté à l'amortissement acoustique. Par exemple, les cellules sont étanches à l'air. Les cellules étanches à l'air offrent une résistance au passage de l'air. Cette structure de mousse acoustique à cellules fermées absorbe l'énergie des ondes sonores lorsque l'air contenu dans les cellules est comprimé et raréfié en raison de l'onde de pression acoustique générée par une onde sonore. Ce type d'amortissement est utilisé pour modifier la réponse en haute fréquence.

Par exemple, la mousse acoustique est une mousse polymère ayant une porosité comprise entre 70% et 98%.

Par exemple, le mastic bitumineux comprend de l'aluminium. La couche 38 de matériau absorbant acoustique se présente par exemple sous la forme d'une feuille de mastic bitumineux haute densité.

Il est entendu par feuille, une couche de mastic bitumineux présentant une épaisseur comprise entre 2 mm et 10 mm.

Une telle feuille de mastic bitumineux modifie la masse de la zone de recouvrement 52 contre laquelle elle est apposée.

Avantageusement, la couche 38 de matériau absorbant acoustique est réalisée en au moins un premier matériau présentant une première masse surfacique et en au moins un deuxième matériau présentant une deuxième masse surfacique distincte de la première densité.

Par exemple, la deuxième masse surfacique est strictement supérieure à la première masse surfacique.

Par exemple, la deuxième masse surfacique est au moins supérieure à deux fois la première masse surfacique et, préférentiellement, la deuxième masse surfacique est supérieure à trois fois la première masse surfacique.

A titre d'exemple, la première masse surfacique est strictement inférieure à 1000 g.m$^{-2}$. A titre d'exemple, la deuxième masse surfacique est supérieure ou égale à 1000 g.m$^{-2}$ et préférentiellement égale à 3500 g.m$^{-2}$.

Par exemple, par exemple, la couche 38 de matériau absorbant acoustique comprend de la mousse acoustique présentant la première masse surfacique et du mastic bitumineux présentant la deuxième masse surfacique.

Ainsi, la couche 38 de matériau absorbant acoustique est réalisée en au moins un premier matériau présentant une première masse volumique et en au moins un deuxième matériau présentant une deuxième masse volumique distincte de la première densité.

Par exemple, la deuxième masse volumique est strictement supérieure à la première masse volumique.

Par exemple, la deuxième masse volumique est au moins supérieure à deux fois la première masse volumique et, préférentiellement, la deuxième masse volumique est supérieure à trois fois la première masse volumique.

En outre, par exemple, le premier matériau à une première porosité supérieure à une deuxième porosité du deuxième matériau.

Selon un exemple de réalisation spécifique, la couche 38 de matériau absorbant acoustique comprend de la ouate de fibres d'acétate liées. Par exemple, la masse volumique de la couche 38 de matériau absorbant acoustique est de 40000 g.m$^{-3}$. Un tel matériau est par exemple connu sous le nom de "Bondum 800".

A titre d'exemple, la couche 38 de matériau absorbant acoustique en ouate de fibres d'acétate liées présente une épaisseur comprise entre 5 et 30 millimètres.

Le fonctionnement de l'enceinte acoustique 24A va être décrit ci-après.

Lorsque la membrane 39 du haut-parleur 30A se déplace selon l'axe de haut-parleur X, la membrane 39 crée des déplacement d'air qui forment des ondes sonores. Les ondes sonores se propagent dans la cavité 40 et heurtent la couche 38 de matériau absorbant acoustique.

Le matériau absorbant acoustique de la couche 38 a pour effet d'absorber l'énergie de l'onde acoustique qui atteint ladite couche 38.

Il en résulte une diminution de la réflexion des ondes sonores sur la zone de recouvrement 52 par rapport à une enceinte acoustique ne comprenant pas de couche 38 de matériau absorbant acoustique. En effet, la couche de matériau 38 en matériau absorbant acoustique dans l'enceinte 24A selon l'invention permet d'absorber la réflexion de l'onde progressive arrière au haut-parleur 30A.

Une telle enceinte acoustique ne comprenant pas de couche 38 de matériau absorbant acoustique est appelée « enceinte de référence ».

Ainsi, l'enceinte acoustique 24A selon l'invention présente moins d'ondes stationnaires que l'enceinte acoustique de référence.

Le son émis par l'enceinte 24A présente donc moins de distorsion que l'enceinte de référence.

En outre, la courbe représentant la variation du niveau de pression acoustique en fonction de la fréquence du son émise par l'enceinte acoustique 24A selon l'invention présente des amplitudes moins importantes que les amplitudes de la courbe représentant la variation de la pression acoustique en fonction de la fréquence pour l'enceinte de référence. La courbe de la variation de la pression acoustique est donc lissée pour l'enceinte acoustique 24A selon l'invention par rapport à l'enceinte de référence.

La couche 38 de matériau absorbant acoustique permet donc de contrôler la réponse du niveau de pression acoustique de l'enceinte acoustique 24A pour obtenir un niveau de pression acoustique optimal.

En outre, la couche 38 de matériau absorbant acoustique a pour effet d'absorber l'énergie des ondes sonores qui atteignent cette couche 38 et donc de limiter les ondes stationnaires. Il en résulte moins d'ondes stationnaires.

Le son émis par l'enceinte acoustique 24A selon l'invention est donc de meilleure qualité par rapport à l'enceinte de référence.

En outre, la couche 38 de matériau absorbant acoustique augmente virtuellement le volume de la cavité de 10 % à 20 %. Le volume V40 libre de la cavité 40 peut être ajusté en fonction du volume de la couche 38 de matériau absorbant acoustique. Ainsi, dans l'enceinte acoustique 24A selon l'invention, des fréquences plus basses peuvent être atteintes par rapport aux fréquences du son émis par une enceinte de référence. Une telle couche 38 de matériau absorbant acoustique est donc avantageuse pour un haut-parleur 30A destiné à être intégré dans un appui-tête 12.

Un matériau absorbant acoustique comprenant des fibres d'acétate est un matériau conforme aux exigences de sécurité et de réglementation automobile, facile à manipuler et à couper en production.

Une épaisseur de la couche 38 de matériau absorbant acoustique comprise entre 5 mm et 30 mm est avantageuse pour obtenir un niveau de pression acoustique souhaité et limiter le taux de distorsion acoustique.

L'épaisseur de ladite couche 38 est mesurée selon une direction séparant une face de la couche 38 apposée sur la paroi interne 42 et la face opposée à la face apposée contre la paroi interne 42.

Dans le présent exemple, les dimensions de l'enceinte acoustique 24A correspondent aux dimensions du caisson 36.

A titre d'exemple, la longueur X24 de l'enceinte acoustique 24A mesurée selon une direction parallèle à l'axe de haut-parleur X est comprise entre 25 mm et 80 mm, la largeur Y24 du haut-parleur 30A mesurée selon une direction parallèle à l'axe transversal Y est compris entre 50 mm et 200 mm et la hauteur H24 de l'enceinte acoustique 24A mesurée selon une direction parallèle à l'axe d'élévation Z est comprise entre 100 mm et 300 mm.

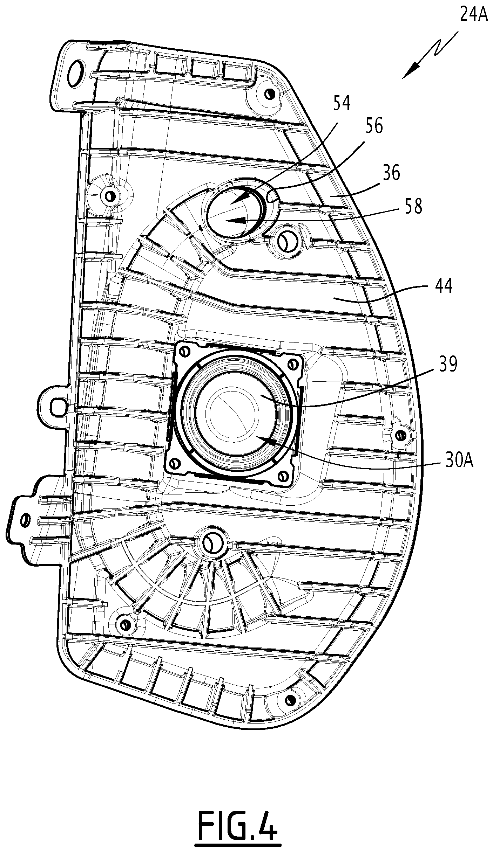

Un autre mode de réalisation de l'appui-tête 12 est décrit en référence aux figures 4 à 7 et uniquement par différence au mode de réalisation des figures 1 à 3. Ce mode de réalisation diffère du mode de réalisation des figures 1 à 3 uniquement par les enceintes acoustiques 24A et 24B.

Dans la suite, seule la première enceinte acoustique 24A est décrite et nommée génériquement par le terme « enceinte acoustique 24A ». La deuxième enceinte acoustique 24B est identique en tous points à l'enceinte acoustique 24B.

L'enceinte acoustique 24A comprend un résonateur auxiliaire.

Le résonateur auxiliaire est par exemple un résonateur basses fréquences. Un résonateur basses fréquences a la propriété d'entrer en résonnance lorsqu'il est soumis à des ondes sonores basses fréquences. Ainsi, le résonateur auxiliaire basses fréquences permet d'amplifier les ondes sonores basses fréquences. On entend par « basses fréquences » des ondes acoustiques présentant une fréquence inférieure ou égale à 300 Hz et de préférence comprise entre 50 Hz et 200 Hz.

Dans le présent mode de réalisation, le résonateur auxiliaire basse fréquence est un tube résonateur 54 basses fréquences, aussi connu sous le terme « tube bass-reflex ».

Le tube résonateur 54 est agencé à l'intérieur du caisson 36 et débouche à l'extérieur de la cavité 40 par un orifice de sortie 56 dans la paroi interne 42, par exemple dans la première demi-coque 44. Un tel orifice 56 est par exemple agencé au-dessus du haut-parleur 30A.

Le tube résonateur 54 est dimensionné pour avoir une fréquence d'accord, notée Fa.

A titre d'illustration, le tube résonateur 54 est délimité par une partie de la paroi interne $42_{C1}$ de la première demi-coque 44 et par une partie de la paroi interne $42_{C2}$ de la deuxième demi-coque 46.

Le tube résonateur 54 délimite une conduite 58 de circulation des ondes sonores.

La conduite 58 de circulation présente la forme d'un cylindre.

Par exemple, la conduite 58 de circulation présente en coupe dans un plan de coupe perpendiculaire à chaque génératrice du cylindre formant la conduite 58, une section interne de la forme d'un cercle. En variante, la conduite 58 de circulation présente une section interne d'une autre forme qu'un cercle.

Le tube résonateur 54 présente un diamètre interne E54, une longueur L54 et un orifice d'entrée 60 d'ondes sonores.

Le diamètre interne E54 du tube résonateur 54 correspond au diamètre interne de la conduite 58 de circulation des ondes sonores.

Le diamètre interne E54 correspond ainsi au diamètre du cercle formant la section interne de la conduite 58 de circulation des ondes sonores.

Dans le cas où, la section de la conduite 58 de circulation présente une forme différente de la forme d'un cercle, le diamètre interne du tube résonateur 54 est égal au diamètre équivalent interne de la conduite 58 de circulation. Ainsi :

$$\mathcal{E}54 = \sqrt{\frac{4 \times S58}{\pi}}$$

Où S58 est égal à l'aire de la section interne de la conduite de circulation 58.

Le diamètre interne E54 du tube résonateur 54 est strictement supérieur à une première valeur minimale V1min pour éviter le bruit d'écoulement avec :

$$V1min = 0{,}8 \times Fa \times Vd.$$

$$\text{Ainsi, } \varepsilon54 > 0.8 \times F_a \times Vd$$

Où Vd est égal au volume d'air maximal déplacé par le mouvement de la membrane 39 du haut-parleur 30A.

La longueur L54 correspond à la distance que parcourt l'air dans la conduite 58 de circulation des ondes sonores.

La longueur L54 du tube résonateur 54 est strictement inférieure à une deuxième valeur minimale, notée V2min.

$$V2min = \frac{c}{12 \times Fa}$$

$$L54 < \frac{c}{12 \times Fa}$$

L'orifice d'entrée 60 d'ondes sonores débouche à l'intérieur de la cavité 40 et est l'orifice par lequel les ondes sonores pénètrent dans le tube résonateur 54.

Par exemple, le diamètre interne E54 du tube résonateur 54 est égale à 180 mm, la longueur L54 du tube résonateur 54 est égale à 8 mm.

La fréquence Fa est donnée par la formule suivante :

$$Fa = \frac{c}{2\pi} \times \sqrt{\frac{\varepsilon54}{V40.L54}}$$

Avec :

- c : la vitesse du son dans l'air,
- $\varepsilon54$ : le diamètre interne du tube résonateur 54,
- V40 : le volume de la cavité 40, et
- L54 : la longueur du tube 54.

Par exemple, le volume V40 de la cavité 40 est égal à 190 cm$^3$.

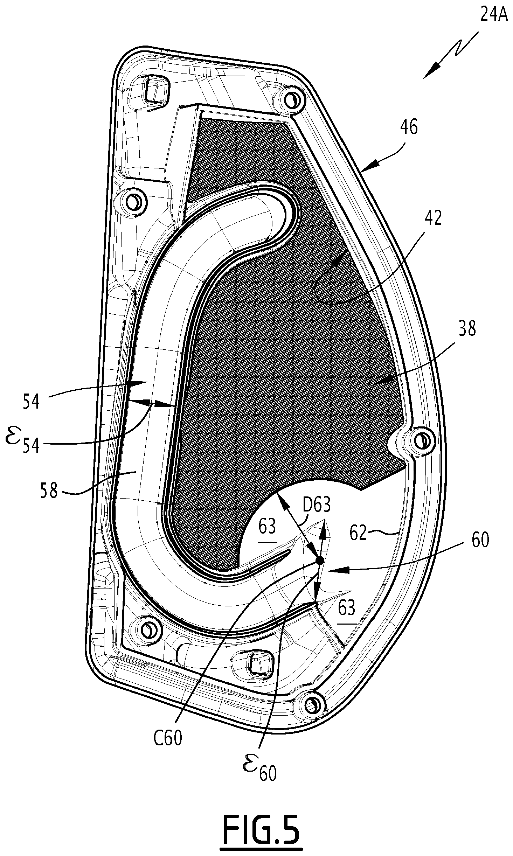

En outre, comme visible sur la figure 5, l'orifice d'entrée 60 débouche dans la cavité 40 en regard d'une portion 62 de la paroi interne 42 dépourvue de couche 38 de matériau absorbant acoustique. Ladite portion 62 de la paroi interne 42 dépourvue de couche de matériau absorbant acoustique est appelée dans la suite de la description « portion nue 62 ». Ainsi, la portion nue 62 correspond à la partie de la paroi interne 42 délimitée par la projection de l'orifice d'entrée 60 selon un axe normal à une section de l'orifice d'entrée 60 sur la paroi interne 42.

L'orifice d'entrée 60 présente un centre noté C60 et un diamètre d'entrée ε60. Le diamètre d'entrée ε60 de l'orifice d'entrée 60 est sensiblement égale à au diamètre interne E54 du tube résonateur 54.

La paroi interne 42 comprend en outre une portion périphérique 63 s'étendant autour d'au moins une partie de la portion nue 62, ladite portion périphérique 63 étant également dépourvue de couche 38 de matériau absorbant acoustique.

La portion périphérique 63 comprend toute portion de paroi interne 42 agencée autour de la portion nue 62 et s'étendant à partir du centre C60 de l'orifice 60 jusqu'à une distance maximale D63 comprise entre une fois et deux fois le diamètre d'entrée ε60 et avantageusement comprise entre une fois et une fois et demi le diamètre d'entrée ε60.

Dans le présent exemple de réalisation, la portion périphérique 63 s'étend par exemple sur la distance maximale D63 à partir du centre C60 de l'orifice d'entrée 60. Autrement dit, dans cet exemple, la portion périphérique 63 présente une dimension maximale égale à D63 et donc comprise entre une fois et deux fois le diamètre d'entrée ε60 et avantageusement entre une fois et une fois et demi le diamètre d'entrée ε60.

La conduite de circulation 58 est dépourvue de couche 38 de matériau absorbant acoustique. Autrement dit, la couche 38 de matériau absorbant acoustique est agencée à l'extérieur de la conduite de circulation 58.

La zone de recouvrement 52 est une portion de la paroi de fond 50. En outre, la zone de recouvrement 52 est agencée au moins en partie en regard du haut-parleur 30A selon l'axe de haut-parleur X. Avantageusement, la zone de recouvrement 52 est une portion de la partie de fond 50 en regard de l'ensemble du haut-parleur 30A selon l'axe de haut-parleur X.

Ainsi, la zone de recouvrement 52 est à l'extérieur de la partie nue 52 et de la portion périphérique 63.

En outre, la distance D62 entre le centre C60 de l'orifice d'entrée et la portion nue 62 est au moins égale à une fois le diamètre d'entrée ε60 de l'orifice d'entrée 60.

En fonctionnement, lorsque la membrane 39 du haut-parleur 30A se déplace selon l'axe de haut-parleur X, la membrane 39 crée des déplacement d'air qui forment des ondes sonores. Les ondes sonores se propagent dans la cavité 40.

La fréquence d'accord Fa du tube résonateur 54 correspond à la fréquence de résonance du tube résonateur 54 et est, par exemple, égale à 100 Hz.

Lorsque les ondes sonores émises par la membrane 39 présentent la fréquence d'accord Fa du tube résonateur 54, le tube résonateur 54 entre en résonance. Le tube résonateur 54 a pour effet d'apporter de l'énergie acoustique à basses fréquences.

En fait, l'enceinte acoustique 30A peut être assimilée à un système masse-ressort, la masse correspondant à l'air présent dans le tube résonateur 54 et le ressort correspondant à l'air situé dans le reste de la cavité 40 en dehors du tube résonateur 54. Dans ce système masse-ressort, une onde stationnaire issue de la réflexion d'une onde progressive arrière émanant du haut-parleur 20A excite le tube résonateur 54 à des fréquences d'excitation, notée FTn. L'indice n correspond au rang de l'harmonique considérée et prend comme valeur des nombres entiers supérieurs ou égal à 1.

Pour une onde sonore de fréquence F, la valeur de la fréquence d'une harmonique de rang n est égal à n fois la fréquence F.

Ainsi, dans le présent exemple de réalisation, la fréquence d'excitation FTn prend par exemple comme valeurs 1000 Hz (correspondant à la fréquence de l'harmonique de rang n=1), 2000 Hz (correspondant à la fréquence de l'harmonique de rang n=2), 3000 Hz (correspondant à la fréquence de l'harmonique de rang n=3) et 4000 Hz (correspondant à la fréquence de l'harmonique de rang n=4).

Chaque fréquence d'excitation Ftn est déterminée par la formule suivante :

$$FTn = \frac{n \times c}{2 \times L54}$$

Avec :

- n : le rang de l'harmonique considérée,
- c : la célérité du son dans l'air, et
- L54 : la longueur du tube résonateur 54.

Dans la suite, la fréquence de résonance FTn est noté n-ième fréquence d'excitation.

Dans une enceinte acoustique différant de l'enceinte acoustique 24A selon l'invention uniquement en ce qu'elle est dépourvue de couche 38 de matériau acoustique (appelée dans la suite enceinte de référence), la réflexion sur la paroi interne 42 de l'enceinte acoustique 30A des ondes progressives arrière du haut-parleur 24A créent une onde stationnaire qui provoque une excitation du tube résonateur 54 aux fréquences FTn.

Dans l'enceinte acoustique 24A selon l'invention, la couche 38 de matériau absorbant acoustique permet d'absorber la réflexion de l'onde progressive arrière au haut-parleur 30A, évitant ainsi la formation d'une onde stationnaire et donc la résonance du tube résonateur 54.

Il en résulte, dans l'enceinte acoustique 24A selon l'invention, une diminution de la réflexion des ondes sonores contre la paroi interne 42. Ainsi, l'enceinte acoustique 24A selon l'invention présente moins d'ondes stationnaires que l'enceinte de référence.

De plus, le son émis par l'enceinte acoustique 24A selon l'invention présente moins de distorsions par rapport à l'enceinte de référence.

En outre, le rembourrage de l'enceinte acoustique 24A selon l'invention avec la couche 38 de matériau absorbant acoustique augmente virtuellement le volume de la cavité 40 et permet d'avoir une fréquence d'accord Fa du tube résonateur 54 plus basse. La mesure montre un gain de 10 Hz. Ce gain est notamment lié à l'augmentation virtuelle du volume V de l'enceinte acoustique grâce à la diminution de la vitesse du son dans le milieu absorbant.

En particulier, la fréquence d'accord Fa présente une diminution de 12Hz lorsque le volume V36 est de la cavité 36 est augmenté de 15%. Le son émis par l'enceinte acoustique 24A est donc de meilleure qualité.

Ainsi, l'enceinte acoustique 24A permet une meilleure restitution sonore.

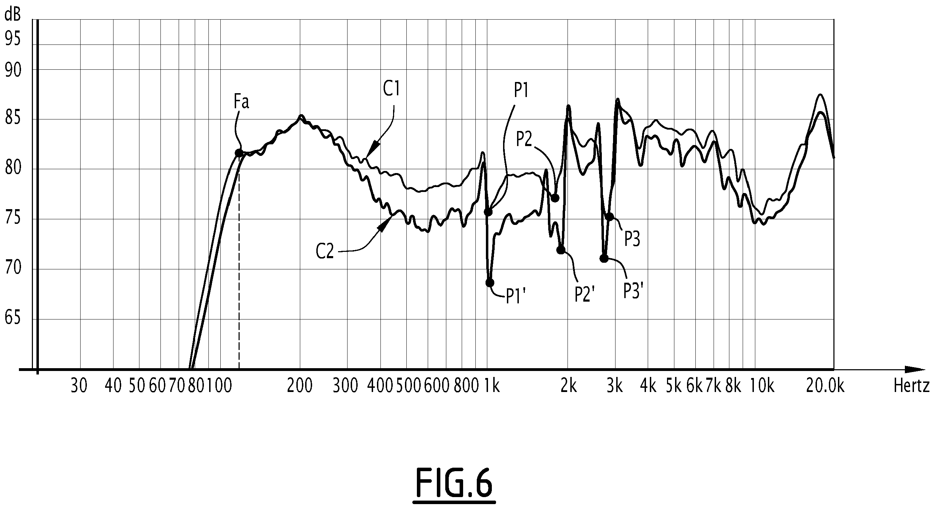

La figure 6 est un diagramme représentant deux courbes C1 et C2. La courbe C1 représente la variation du niveau de pression acoustique SPL mesurée pour l'enceinte acoustique 24A selon l'invention en fonction de la fréquence du son émis par cette enceinte acoustique 24A.

La courbe C2 représente la variation du niveau de pression acoustique SPL mesurée pour l'enceinte de référence en fonction de la fréquence du son émis par l'enceinte de référence.

A titre d'exemple, ces mesures sont réalisées au moyen d'un microphone agencé à l'extérieur de chaque l'enceinte acoustique et en regard du haut-parleur de chacune des enceintes, par exemple à une distance de 5 cm du haut-parleur selon l'axe de haut-parleur X.

Comme visible sur la figure 6, la courbe C1 présente trois pics caractéristiques notés premier pic P1, deuxième pic P2 et troisième pic P3. Le premier pic P1 correspond au taux de pression acoustique à sensiblement la première fréquence d'excitation FT1 du tube résonateur 54. Le deuxième pic P2 correspond au taux de pression acoustique à sensiblement la deuxième fréquence d'excitation FT2 du tube résonateur 54. Le troisième pic P3 correspond au taux de pression acoustique à sensiblement la troisième fréquence d'excitation FT3 du tube résonateur 54.

La courbe C2 pour l'enceinte de référence présente trois pics caractéristiques notés premier pic P1', deuxième pic P2' et troisième pic P3'. Le premier pic P1' correspond au taux de pression acoustique à sensiblement la première fréquence d'excitation Ft1' du tube résonateur 54. Le deuxième pic P2' correspond au taux de pression acoustique à sensiblement la deuxième fréquence de d'excitation Ft2' du tube résonateur. Le troisième pic P3 correspond au taux de pression acoustique à sensiblement la troisième fréquence d'excitation Ft3' du tube résonateur 54.

Comme cela est visible sur la figure 6, en comparant les courbes C1 et C2, les amplitudes en valeur absolue du premier pic P1, du deuxième pic P2 et du troisième pic P3 pour l'enceinte acoustique 24A sont inférieures respectivement aux amplitudes du premier pic P1', du deuxième pic P2' et du troisième pic P3' de l'enceinte de référence.

Ainsi, la courbe C1 des niveaux de pression acoustique de l'enceinte acoustique 24A selon l'invention est lissée par rapport à la courbe C2 des niveaux de pression acoustique de l'enceinte de référence. Autrement dit, l'enceinte acoustique 24A selon l'invention présente des variations d'amplitude de la pression acoustique plus faibles et/ou moins de variation d'amplitudes de la pression acoustique que l'enceinte de référence, notamment aux fréquences d'excitation FTn du tube résonateur 54.

Ainsi, l'enceinte acoustique 24A selon l'invention permet d'obtenir un bon effet de résonance du tube résonateur 54 tout en annihilant l'effet d'excitation du tube résonateur 54.

En outre, les niveaux de pression acoustique sont maintenus dans la plage souhaitée comprise entre 75 décibels (dB) et 88 dB sur la plage de fréquences comprise entre 200 KHz et 5 KHz.

Ainsi, le son émis par l'enceinte acoustique 24A selon l'invention est de meilleure qualité.

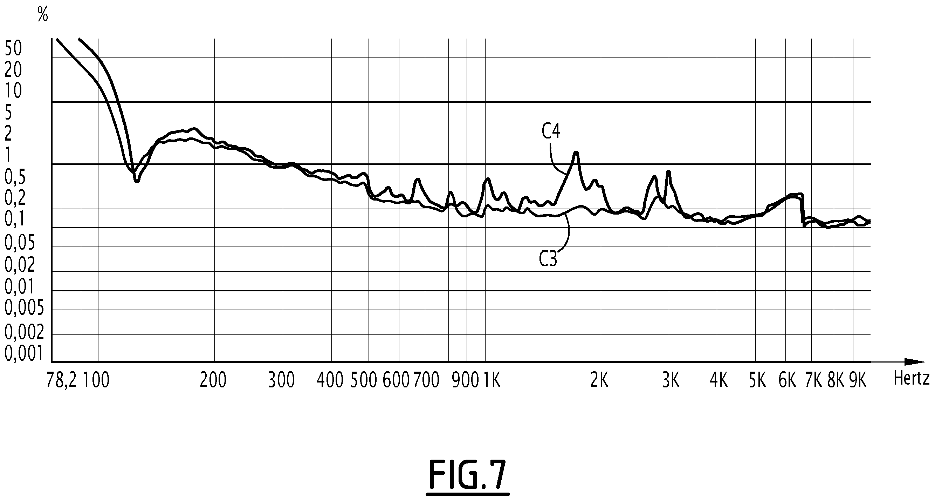

Sur la figure 7, deux courbes C3 et C4 sont représentées et montrent la variation du taux de distorsion harmonique total en fonction de la fréquence du son émis.

La courbe C3 est la variation du taux de distorsion harmonique total mesurée du son émis par l'enceinte acoustique 24A selon l'invention. La courbe C4 est la variation du taux de distorsion harmonique total mésurée du son émis par l'enceinte acoustique de référence.

La mesure est réalisée à 5 centimètres de chaque enceinte acoustique 24A et à 85 dB.

La courbe C3 est plus lisse que la courbe C4. En effet, la courbe C3 présente moins de pics que la courbe C4 et/ou des pics présentant des amplitudes plus petites que les amplitudes des pics de la courbe C4.

Ainsi, la couche 38 de matériau absorbant acoustique permet de réduire les distorsions du son qui seraient émis par l'enceinte de référence.

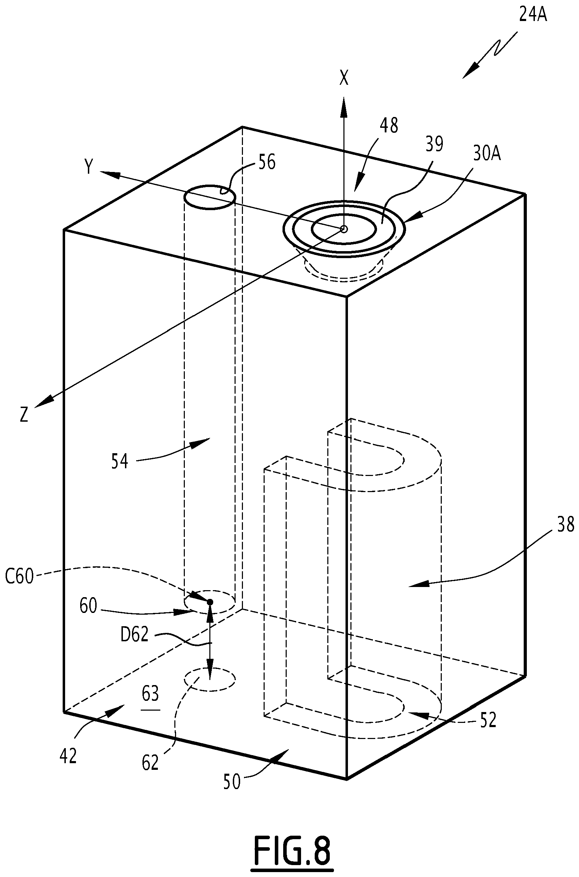

En variante, en référence à la figure 8, la couche 38 de matériau absorbant acoustique s'étend en saillie de la partie de fond 50 selon l'axe de haut-parleur X.

La couche 38 matériau absorbant acoustique présente une dimension selon l'axe de haut-parleur X au moins égale à un tiers de la distance entre la partie de réception 48 et la partie de fond 50.

En section dans un plan de coupe normal à l'axe X, la couche 38 de matériau absorbant acoustique présente la forme d'un « C ».

La zone de recouvrement 52 est agencée sur une partie de la partie de fond 50.

Par exemple, la zone de recouvrement 52 en agencée au moins en regard du haut-parleur 30A. En effet, comme visible sur la figure 8, au moins une partie de la zone de recouvrement 52 est au moins en partie superposée avec la membrane 39 du haut-parleur 30A selon l'axe de haut-parleur X.

La zone de recouvrement 52 est agencée à l'extérieur de la partie nue 62 et de la portion périphérique 63.

Selon un autre exemple, la couche 38 de matériau absorbant acoustique présente une forme parallélépipédique à section rectangulaire.

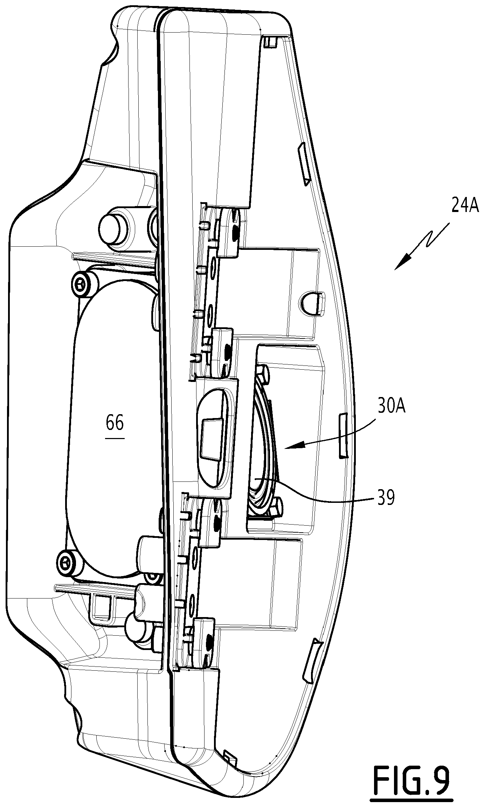

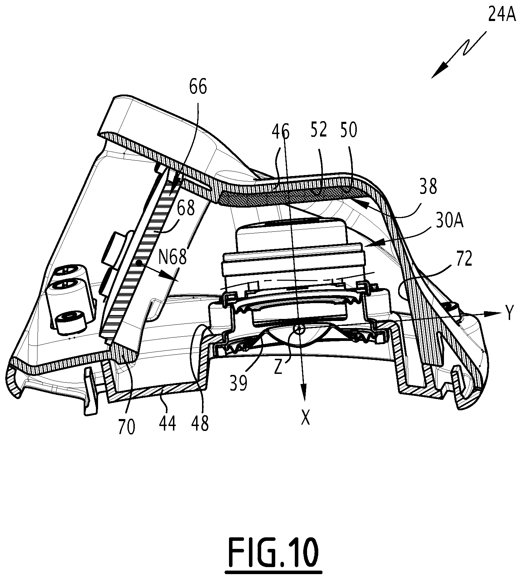

Un autre mode de réalisation de l'appui-tête est décrit en référence aux figures 9 et 10 et uniquement par différence au mode de réalisation des figures 1 à 3. Ce mode de réalisation diffère du mode de réalisation des figures 1 à 3 uniquement par les enceintes acoustiques 24A et 24B.

Dans la suite, seule la première enceinte acoustique 24A est décrite. La deuxième enceinte acoustique 24B est identique à l'enceinte acoustique 24B.

L'enceinte acoustique 24A comprend un résonateur auxiliaire.

Le résonateur auxiliaire est par exemple un résonateur basses fréquences. Un résonateur basse-fréquence entre en résonance lorsqu'il est soumis à des ondes sonores basses fréquences. Ainsi, le résonateur auxiliaire basses fréquences permet d'amplifier les ondes sonores basses fréquences.

Dans le présent mode de réalisation, le résonateur passif auxiliaire est par exemple un radiateur passif 66.

Le radiateur passif 66 comprend une membrane 68 s'étendant dans un plan.

Le radiateur passif 66 est monté sur une partie de montage 70 de la paroi interne 42.

Au moins la partie 72 de la paroi interne 42 du caisson 38 agencée en regard de la paroi de montage selon une direction normale N68 au plan dans lequel s'étend la membrane 68 du radiateur passif 66 est dépourvue de couche 38 de matériau absorbant acoustique.

La zone de recouvrement 52 est située en regard du haut-parleur 30A selon l'axe de haut-parleur X.

Le radiateur passif 66 présente une fréquence de résonance.

En fonctionnement, lorsque la membrane 39 du haut-parleur 30A présente des mouvements axiaux selon l'axe de haut-parleur X, la membrane 39 du haut-parleur 24A crée des déplacement d'air qui forment des ondes sonores. Les ondes sonores se propagent dans la cavité 40 et heurtent la couche 38 de matériau absorbant acoustique. Le matériau absorbant acoustique de la couche 38 a pour effet d'absorber l'énergie de l'onde qui la heurte.

En outre, à la fréquence de résonance du radiateur passif 66, les ondes stationnaires sont également absorbées par la couche 38 de matériau absorbant acoustique.

Il en résulte une diminution de la réflexion des ondes sur la zone de recouvrement 52. Ainsi, il en résulte une diminution des ondes stationnaires.

La restitution sonore de l'enceinte acoustique 24A présente moins de distorsion. Elle est donc de meilleure qualité.

Ainsi, l'enceinte acoustique 24A permet une meilleure restitution sonore.

Lorsque le haut-parleur 30A émet des ondes sonores, les ondes stationnaires sont atténuées.

Dans tous les modes de réalisation de l'enceinte acoustique 24A, le son émis est de meilleure qualité.

Ainsi, l'enceinte acoustique 24A présente une bonne qualité malgré ses dimensions réduites afin de pouvoir être intégrée dans un appui-tête de véhicule.

Bien entendu l'enceinte acoustique 24A pourrait être intégrée dans un autre élément qu'un élément de garnissage d'appui-tête, tel qu'un élément de garnissage d'un dossier de siège, un panneau de porte, etc.

Selon un exemple particulier des appui-têtes décrits dans l'ensemble des modes de réalisations des figures 1 à 10, le volume V40 de la cavité 40 est strictement inférieur à 9 dm$^3$ et, par exemple, inférieur ou égal à 1 dm$^3$.

## Revendications

1. Appui-tête (12) comprenant au moins une enceinte acoustique (24A, 24B), l'enceinte acoustique (24A, 24B) comprenant :

   - au moins un haut-parleur (30A, 30B) définissant un axe de haut-parleur (X), configuré pour émettre des ondes sonores,
   - un caisson (36) comportant au moins une paroi interne (42) délimitant avec le haut-parleur (30A, 30B) une cavité (40), la paroi interne (42) présentant au moins une partie de réception (48) du haut-parleur (30A, 30B) délimitant une ouverture (51) et une partie de fond (50) opposée à la partie de réception (48) selon l'axe de haut-parleur (X), le haut-parleur (30A, 30B) étant monté sur au moins un bord de ladite ouverture (51),
   **caractérisé en ce que** l'enceinte acoustique (24A, 24B) comprend au moins une couche (38) en au moins un matériau absorbant acoustique agencée à l'intérieur de la cavité (40) et recouvrant au moins une zone de recouvrement (52) de la partie de fond (50).

2. Appui-tête selon la revendication 1, dans lequel la zone de recouvrement (52) est agencée au moins en partie en regard du haut-parleur (30A, 30B) selon l'axe de haut-parleur (X).

3. Appui-tête selon la revendication 1 ou 2, dans lequel l'enceinte acoustique (24A, 24B) comprend un tube résonateur (54) agencé au moins en partie à l'intérieur de la cavité (40), le tube résonateur (54) présentant au moins un orifice d'entrée (60) d'ondes sonores débouchant dans la cavité (40), ledit au moins un orifice d'entrée (60) ayant une projection sur au moins une portion nue (62) de la paroi interne (42) selon un axe normal à l'orifice d'entrée (60), ladite portion nue (62) étant dépourvue de couche (38) de matériau absorbant acoustique.

4. Appui-tête selon la revendication 3, dans lequel le tube résonateur (54) présente un diamètre interne (E54), la paroi interne (42) comprenant une portion périphérique (63) s'étendant autour d'au moins une partie de la portion nue (62), ladite portion périphérique (63) présentant une dimension maximale comprise entre une fois et une fois et demi le diamètre interne (E54) du tube résonateur (54), ladite portion périphérique (63) étant également dépourvue de couche (38) de matériau absorbant acoustique.

5. Appui-tête selon la revendication 3 ou 4, dans lequel le tube résonateur (54) délimite une conduite de circulation (58) des ondes sonores, la conduite de circulation (59) étant dépourvue de couche (38) de matériau absorbant acoustique.

6. Appui-tête selon la revendication 1 ou 2, dans lequel l'enceinte acoustique (24A, 24B) présente un radiateur passif (66) monté sur une partie de montage (70) de la paroi interne (42), le radiateur passif (66) comprenant une membrane (68) s'étendant sensiblement dans un plan (N68), au moins une partie (72) de la paroi interne (42) agencée en regard du radiateur passif (66) selon une direction normale (N68) au plan dans lequel s'étend la membrane (68) est dépourvue de couche (38) de matériau absorbant acoustique.

7. Appui-tête selon l'une quelconque des revendications précédentes, dans lequel le matériau absorbant acoustique de la couche (38) de matériau absorbant acoustique comprend au moins l'un des matériaux compris dans la liste de matériaux suivants : des fibres d'acétate liées, de la laine de mouton à poils longs, du feutre acoustique, du feutre de laine pure, de la mousse acoustique, du mastic bitumineux, la couche (38) de matériau acoustique comprenant préférentiellement au moins des fibres d'acétate liées.

8. Appui-tête selon l'une quelconque des revendications précédentes, dans lequel la couche (38) en matériau absorbant acoustique est réalisée en au moins un premier matériau présentant une première masse surfacique et en au moins un deuxième matériau présentant une deuxième masse surfacique distincte de la première masse surfacique.

9. Appui-tête selon l'une quelconque des revendications précédentes, comprenant un élément de garnissage, l'enceinte acoustique (24A, 24B) étant au moins en partie agencée à l'intérieur de l'élément de garnissage (21, 23).

10. Siège, notamment pour un véhicule, comprenant un appui-tête selon l'une quelconque des revendications précédentes.

**Patentansprüche**

1. Kopfstütze (12), umfassend mindestens eine Lautsprecherbox (24A, 24B), die Lautsprecherbox (24A, 24B) umfassend:

   - mindestens einen Lautsprecher (30A, 30B), der eine Lautsprecherachse (X) definiert, die zum Aussenden von Schallwellen konfiguriert ist,
   - eine Kammer (36), die mindestens eine Innenwand (42) aufweist, die mit dem Lautsprecher (30A, 30B) einen Hohlraum (40) begrenzt, wobei die Innenwand (42) mindestens einen Aufnahmeteil (48) des Lautsprechers (30A, 30B), der eine Öffnung (51) begrenzt, und einen Bodenteil (50) gegenüberliegend des Aufnahmeteils (48) gemäß der Lautsprecherachse (X) vorweist, wobei der Lautsprecher (30A, 30B) an mindestens einem Rand der Öffnung (51) montiert ist,
   **dadurch gekennzeichnet, dass** die Lautsprecherbox (24A, 24B) mindestens eine Schicht (38) aus mindestens einem schallabsorbierenden Material umfasst, die innerhalb des Hohlraums (40) angeordnet ist und mindestens eine Abdeckzone (52) des Bodenteils (50) bedeckt.

2. Kopfstütze nach Anspruch 1, wobei die Abdeckzone (52) mindestens teilweise gegenüber dem Lautsprecher (30A, 30B) gemäß der Lautsprecherachse (X) angeordnet ist.

3. Kopfstütze nach Anspruch 1 oder 2, wobei die Lautsprecherbox (24A, 24B) ein Resonatorrohr (54) umfasst, das mindestens teilweise im Inneren des Hohlraums (40) angeordnet ist, wobei das Resonatorrohr (54) mindestens einen Einlass (60) von Schallwellen vorweist, der in dem Hohlraum (40) mündet, wobei der mindestens eine Einlass (60) einen Vorsprung an mindestens einem blanken Abschnitt (62) der Innenwand (42) gemäß einer Achse senkrecht zu dem Einlass (60) besitzt, wobei der blanke Abschnitt (62) frei von einer Schicht (38) aus schallabsorbierendem Material ist.

4. Kopfstütze nach Anspruch 3, wobei das Resonatorrohr (54) einen Innendurchmesser (854) vorweist, die Innenwand (42) umfassend einen Umfangsabschnitt (63), der sich um mindestens einen Teil des blanken Abschnitts (62) erstreckt, wobei der Umfangsabschnitt (63) eine maximale Abmessung zwischen dem Einfachen und dem Anderthalbfachen des Innendurchmessers (854) des Resonatorrohrs (54) vorweist, wobei der Umfangsabschnitt (63) auch frei von der Schicht (38) aus schallabsorbierendem Material ist.

5. Kopfstütze nach Anspruch 3 oder 4, wobei das Resonatorrohr (54) eine Zirkulationsleitung (58) der Schallwellen begrenzt, wobei die Zirkulationsleitung (59) frei von der Schicht (38) aus schallabsorbierendem Material ist.

6. Kopfstütze nach Anspruch 1 oder 2, wobei die Lautsprecherbox (24A, 24B) einen Passivstrahler (66) vorweist, der an einem Montageteil (70) der Innenwand (42) montiert ist, der Passivstrahler (66) umfassend eine Membran (68), die sich im Wesentlichen in einer Ebene (N68) erstreckt, wobei mindestens ein Teil (72) der Innenwand (42), die gegenüber des Passivstrahlers (66) gemäß einer Richtung (N68) senkrecht zu der Ebene angeordnet ist, in der sich die Membran (68) erstreckt, frei von der Schicht (38) aus schallabsorbierendem Material ist.

7. Kopfstütze nach einem der vorstehenden Ansprüche, wobei das schallabsorbierende Material der Schicht (38) aus schallabsorbierendem Material mindestens eines der Materialien umfasst, die in der Liste von folgenden Materialien enthalten sind: gebundene Acetatfasern, hochflorige Schafwolle, Akustikfilz, Reinwollfilz, Akustikschaum, Bitumenkitt, die Schicht (38) aus akustischem Material umfassend vorzugsweise mindestens die gebundenen Acetatfasern.

8. Kopfstütze nach einem der vorstehenden Ansprüche, wobei die Schicht (38) aus schallabsorbierendem Material aus mindestens einem ersten Material, das eine erste flächenbezogene Masse vorweist, und aus mindestens einem zweiten Material hergestellt ist, das eine zweite flächenbezogene Masse vorweist, die sich von der ersten flächenbezogene Masse unterscheidet.

9. Kopfstütze nach einem der vorstehenden Ansprüche, umfassend ein Verkleidungselement, wobei die Lautsprecherbox (24A, 24B) mindestens teilweise im Inneren des Verkleidungselements (21, 23) angeordnet ist.

10. Sitz, insbesondere für ein Fahrzeug, umfassend eine Kopfstütze nach einem der vorstehenden Ansprüche.

## Claims

1. A headrest (12) comprising at least one speaker enclosure (24A, 24B), the speaker enclosure (24A, 24B) comprising:

   - at least one loudspeaker (30A, 30B) defining a speaker axis (X), configured to emit sound waves,
   - a chamber (36) having at least one inner wall (42) delimiting with the loudspeaker (30A, 30B) a cavity (40), the inner wall (42) having at least one part (48) for receiving the loudspeaker (30A, 30B) delimiting an opening (51) and a bottom part (50) opposite the receiving part (48) along the loudspeaker axis (X), the loudspeaker (30A, 30B) being mounted on at least one edge of said opening (51),

   **characterized in that** the speaker enclosure (24A, 24B) comprises at least one layer (38) made of at least one sound-absorbing material arranged inside the cavity (40) and covering at least one covering zone (52) of the bottom part (50).

2. The headrest according to claim 1, wherein the covering zone (52) is arranged at least in part opposite the loudspeaker (30A, 30B) along the loudspeaker axis (X).

3. The headrest according to claim 1 or 2, wherein the speaker enclosure (24A, 24B) comprises a resonator tube (54) arranged at least partially inside the cavity (40), the resonator tube (54) having at least one sound wave inlet port (60) opening into the cavity (40), said at least one inlet port (60) having a projection onto at least one bare portion (62) of the inner wall (42) along an axis normal to the inlet port (60), said bare portion (62) being free of a layer (38) of sound-absorbing material.

4. The headrest according to claim 3, wherein the resonator tube (54) has an inner diameter ($\varepsilon 54$), the inner wall (42) comprising a peripheral portion (63) extending around at least part of the bare portion (62), said peripheral portion (63) having a maximum dimension between one and one-and-a-half times the inner diameter ($\varepsilon 54$) of the resonator tube (54), said peripheral portion (63) also being free of a layer (38) of sound-absorbing material.

5. The headrest according to claim 3, wherein the resonator tube (54) delimits a circulation duct (58) of the sound waves, the circulation duct (59) being devoid of a layer (38) of acoustic absorbent material.

6. The headrest according to claim 1 or 2, wherein the speaker enclosure (24A, 24B) has a passive radiator (66) mounted on a mounting part (70) of the inner wall (42), the passive radiator (66) comprising a membrane (68) extending substantially in a plane (N68), at least a part (72) of the inner wall (42) arranged opposite the passive radiator (66) in a direction (N68) normal to the plane wherein the membrane (68) extends is free of layer (38) of sound-absorbing material.

7. The headrest according to any of the preceding claims, wherein the sound-absorbing material of the layer (38) of sound-absorbing material comprises at least one of the materials comprised in the list of following materials: bonded acetate fibers, long-hair sheep wool, acoustic felt, pure wool felt, acoustic foam, bituminous sealant, the layer (38) of acoustic material preferentially comprising at least bonded acetate fibers.

8. The headrest according to any one of the preceding claims, wherein the layer (38) of sound absorbing material is made of at least one first material having a first basis weight and at least one second material having a second basis weight distinct from the first basis weight.

9. The headrest according to any one of the preceding claims, comprising a trim element, the speaker enclosure (24A, 24B) being at least partially arranged inside the trim element (21, 23).

10. A seat, in particular for a vehicle, comprising a headrest according to any one of the preceding claims.

FIG.1

**FIG.2**

## FIG.3

24A

54

56

36

58

44

39

30A

## FIG.4

## FIG.5

FIG.6

FIG.7

EP 3 868 602 B1

## FIG.8

FIG.9

**FIG.10**

**EP 3 868 602 B1**

## RÉFÉRENCES CITÉES DANS LA DESCRIPTION

**Documents brevets cités dans la description**

- EP 3257402 A1